# EUROPÄISCHE PATENTSCHRIFT

(11) **EP 2 394 095 B1**
(45) Veröffentlichungstag und Bekanntmachung des Hinweises auf die Patenterteilung: **26.08.2015**
(21) Anmeldenummer: 10705272.2
(22) Anmeldetag: 03.02.2010
(51) Int. Cl.: F21S 8/00, F21K 99/00, G02B 17/06, G02B 27/10, G03B 21/20, G02B 27/09, F21V 7/00, F21W 131/406, F21Y 101/02

(54) **LEUCHTVORRICHTUNG MIT MEHREREN LICHTQUELLEN UND EINER REFLEXIONSANORDNUNG UND REFLEKTOREINHEIT**
LIGHTING DEVICE HAVING A PLURALITY OF LIGHT SOURCES AND A REFLECTION ARRANGEMENT AND REFLECTOR UNIT
DISPOSITIF D'ÉCLAIRAGE COMPORTANT PLUSIEURS SOURCES DE LUMIÈRE ET UN SYSTÈME DE RÉFLEXION ET UNITÉ DE RÉFLECTEUR

(30) Priorität: 05.02.2009 DE 102009007647
(43) Veröffentlichungstag der Anmeldung: 14.12.2011
(73) Patentinhaber: Ultralite Deutschland Haerle Lichttechnik GmbH, 89584 Ehingen (DE)
(72) Erfinder: HAERLE, Kaspar, 89584 Ehingen (DE); NOKIC, Izet, 89584 Ehingen-Altbierlingen (DE)
(74) Vertreter: Dobler, Markus
(86) Internationale Anmeldenummer: PCT/EP2010/000660
(87) Internationale Veröffentlichungsnummer: WO 2010/089100

(56) Entgegenhaltungen:
- EP-A2- 1 300 626
- WO-A1-2008/148423
- WO-A2-2008/089324
- DE-A1-102006 048 571
- GB-A- 193 439
- US-B1- 6 356 390

## Beschreibung

### Stand der Technik:

Leuchten mit mehreren künstlichen Lichtquellen sind zum Beispiel abhängig von der Art der verwendeten Lichtquellen für unterschiedliche Einsatzzwecke geeignet. Der Einsatz von Leuchten mit z. B. Leuchtdioden (LED) bzw. LED-Lichtquellen ist aufgrund der vergleichsweise geringen Leistung der Leuchtdioden auf Anwendungen beschränkt, welche keine hohen oder höchsten Lichtleistungen erbringen müssen. Leuchten mit Lichtquellen geringer Leistung kommen beispielsweise für Hintergrundbeleuchtungen, LED-Wände, Taschenlampen, Fahrradlampen oder Leseleuchten bzw. Dekorationsstrahler zur Anwendung, insbesondere wenn darin eine kleine Anzahl von LED-Lichtquellen vorgesehen ist. In der Regel ist in diesen Leuchten eine lichtreflektierende Einrichtung bzw. eine Reflexionsanordnung vorhanden.

Des Weiteren sind als Strahler ausgebildete Leuchten bekannt, die eine Mehrzahl von LED-Lichtquellen aufweisen, welche insbesondere in einer Ebene angeordnet sind. Solche Flächenstrahler leuchten beispielsweise eine Fläche direkt aus bzw. können diese teilweise auch farblich verändern, wobei ein Flächenlicht ohne klar definierte Ränder erzeugt wird.

### Aufgabe und Vorteile der Erfindung:

Aufgabe der vorliegenden Erfindung ist es, eine Leuchtvorrichtung mit mehreren Lichtquellen und einer Reflexionsanordnung so zu verbessern, dass die Leistungscharakteristik der Leuchtvorrichtung verbessert ist. Diese Aufgabe wird durch die Ansprüche 1, 2 gelöst. Vorteilhafte Weiterbildungen der Erfindung sind in den abhängigen Ansprüchen aufgezeigt.

Die Erfindung geht aus von einer Leuchtvorrichtung mit mehreren Lichtquellen und einer Reflexionsanordnung, wobei die Lichtquellen vor einer Reflexionsfläche der Reflexionsanordnung positioniert sind, wobei eine Abstrahlrichtung eines Lichtstrahls der Lichtquellen entgegen einer Hauptabstrahlrichtung der Leuchtvorrichtung verläuft und wobei der Lichtstrahl der Lichtquellen durch Reflexion in die Hauptabstrahlrichtung der Leuchtvorrichtung über die Reflexionsanordnung umgelenkt wird.

Der Kern der Erfindung liegt darin, dass ein erster Reflexionsabschnitt vorgesehen ist und dass ein erhaben ausgebildeter zweiter Reflexionsabschnitt vorhanden ist, der in Bezug auf den ersten Reflexionsabschnitt innenliegend und vom ersten Reflexionsabschnitt zumindest teilweise umgeben ist, wobei der erste und der zweite Reflexionsabschnitt derart aufeinander abgestimmt sind, dass ein Hauptlichtstrahl dadurch erzeugbar ist, dass Licht der Lichtquellen zuerst auf den erhabenen zweiten konischen oder im Wesentlichen konischen Reflexionsabschnitt trifft und von dort auf den ersten Reflexionsabschnitt reflektiert wird und nach einer erneuten Reflexion die Reflexionsanordnung in der Hauptabstrahlrichtung verlässt. Damit wird eine Leuchtvorrichtung mit mehreren Lichtquellen bereitgestellt, die eine vergleichsweise hohe Leistung liefert. Insbesondere ist die Auswahl der Art der Lichtquellen nicht auf einzelne bzw. wenige beschränkt, sondern es können nahezu sämtliche bekannten bzw. unterschiedlichen Arten von Lichtquellen in der Leuchtvorrichtung verwendet werden. Insbesondere kann eine erfindungsgemäße Leuchtvorrichtung die Wirkung einer Hochleistungsleuchte problemlos erreichen, auch wenn Lichtquellen integriert sind, welche im Hinblick auf eine hohe Abstrahlleistung des erzeugten Lichtes ungünstige Eigenschaften aufweisen. Die Bandbreite der vorteilhaft für die vorgeschlagenen Hochleistungsleuchten verwendbaren Lichtquellen erweitert sich damit enorm. Insbesondere lassen sich nun Lichtquellen für höchste Lichtleistungen vorteilhaft einsetzen, die bisher aufgrund der vergleichsweise unbefriedigenden Abstrahlleistung nicht in Frage gekommen sind. Mit diesen Lichtquellen lassen sich zudem andere, aus den genannten Gründen bislang nicht ausschöpfbare positive Effekte der betreffenden Lichtquellen nutzen, wobei wirtschaftliche und/oder technische Aspekte eine rolle spielen. Insgesamt kann somit ein besonders hohes Verbesserungspotential erzielt werden.

Besonders vorteilhaft ist dabei, dass selbst Lichtquellen, welche mit unscharfem Randbereich abstrahlen bzw. keinen definierten Lichtbündelrand aufweisen, erfindungsgemäß nun einen Lichtstrahl mit scharfem Rand bzw. von gebündelter Natur ermöglichen. Insbesondere wird eine Hochleistungslichtquelle mit einer Abstrahlcharakteristik bereitgestellt, die sich durch einen bis zu einer Randbegrenzung des erzeugten lichtstarken Strahls auszeichnet.

Mit der erfindungsgemäßen Leuchtvorrichtung wird eine Lichtquelle bereitgestellt, die sich durch hohe Lichtintensitäten auszeichnet. Das Reflexionssystem vermischt die Strahlen jeder Lichtquelle und bündelt die Strahlen so, dass der Eindruck einer einzigen konventionellen Lichtquelle entsteht.

Durch den erhabenen zweiten Reflexionsabschnitt wird die ganze oder nahezu die gesamte von der Lichtequellen kommende Strahlung erfasst und so auf den ersten Reflexionsabschnitt umgelenkt, dass eine höchste Lichtstrahlleistung mit gerichtetem Lichtstrahl möglich wird, der in der Hauptabstrahlrichtung erzeugt wird. Dabei verlassen keine oder nur sehr geringe Anteile der Lichtstrahlen in einer zur Hauptabstrahlrichtung verschiednen Strahlrichtung die Leuchtvorrichtung.

Besonders vorteilhaft weist der zweite Reflexionsabschnitt eine Tiefe bzw. eine erhaben vorstehende Abmessung von ca. 40 % bis 80 % der Gesamttiefe des ersten Reflexionsabschnitts auf. Die Gesamttiefe des ersten Reflexionsabschnitts ist z. B. durch dessen Abmessung in Hauptabstrahlrichtung ermittelbar, die sich von einem vorderen Rand des ersten Reflexionsabschnitts bis zu einem davon am weitesten entfernten Punkt am Grunde des ersten Reflexionsabschnitts ergibt. In Sonderausbildungen der Leuchtvorrichtung kann der zweite Reflexionsabschnitt eine Tiefe bzw. eine erhaben vorstehende Abmessung von minimal ca. 10 % bis maximal bis ca. 150 % der Gesamttiefe des ersten Reflexionsabschnitts aufweisen.

Mit der erfindungsgemäßen Leuchtvorrichtung werden Voraussetzungen geschaffen, dass diese beispielsweise für Hochleistungsscheinwerfer in den Bereichen Film, Fernsehen, Theater, Stadionbeleuchtung einsetzbar bzw. für Film-, Video-, Diaprojektoren, Strahler für Outdoorbeleuchtungen und Auto- bzw. Flugzeugscheinwerfer nutzbar sind. Dabei können zur optischen Beeinflussung des erzeugbaren Lichtstrahls zusätzlich Hilfseinrichtungen vorgesehen werden, was weiter unten noch erklärt wird.

Der erste Reflexionsabschnitt ist bevorzugt konisch bzw. mit im Schnitt geraden Flanken, insbesondere kegelstumpfförmig oder polygonal im Querschnitt in umgekehrter Ausrichtung zur konischen Form des zweiten Reflexionsabschnitts. Ausgehend von einem konischen Körper kann die geometrische Gestalt des ersten und zweiten Reflexionsabschnitts zueinander, als eine Spiegelung der Konusspitze oder eines Abschnitts mit gekappter Konusspitze, an einer Querschnittsfläche bzw. durch Abklappung der Spitze oder des Stumpfs um 180 Winkelgrade verstanden werden.

Die Erfindung betrifft außerdem eine Leuchtvorrichtung mit mehreren Lichtquellen und einer Reflexionsanordnung, wobei die Lichtquellen vor einer Reflexionsfläche der Reflexionsanordnung positioniert sind, wobei eine Abstrahlrichtung eines Lichtstrahls der Lichtquellen entgegen oder in Richtung einer Hauptstrahlrichtung der Leuchtvorrichtung verläuft und wobei der Lichtstrahl der Lichtquellen durch Reflexion in die Hauptabstrahlrichtung der Leuchtvorrichtung über die Reflexionsanordnung umgelenkt wird. Ein weiterer wesentlicher Aspekt der Erfindung liegt darin, dass ein erster Reflexionsabschnitt vorgesehen ist und dass ein erhaben ausgebildeter zweiter Reflexionsabschnitt vorhanden ist, der in Bezug auf den ersten Reflexionsabschnitt innenliegend und vom ersten Reflexionsabschnitt zumindest teilweise umgeben ist, wobei der erste und der zweite Reflexionsabschnitt derart aufeinander abgestimmt sind, dass ein Hauptlichtstrahl dadurch erzeugbar ist, dass Licht der Lichtquellen nach einer Reflexion auf den erhabenen zweiten Reflexionsabschnitt trifft und von dort auf den ersten Reflexionsabschnitt reflektiert wird und nach einer Reflexion an diesem von dort abgestrahlt wird. Der erhabene zweite Reflexionsabschnitt ist insbesondere konisch, mit runder oder polygonaler Querschnittsform. Er kann z. B. kegelförmig bzw. kegelstumpfförmig sein. Dabei sind die im Schnitt des zweiten Reflexionsabschnitts konisch geneigten Flanken gerade, was die nicht divergierende Lichtstrahlausbildung unterstützt. Wären nicht konische bzw. nicht zumindest im Wesentlichen konische Flanken des zweiten Reflexionsabschnitts realisiert, sondern z. B. im Schnitt gebogene bzw. gekrümmte Flanken, würde dies dem gewünschten Effekt eines erzeugten scharf umrandeten bzw. gebündelten Lichtstrahls gerade entgegenwirken.

Der erzeugte Lichtstrahl kann zu dunklen umgebenden Bereichen sprungartig eine hohe Helligkeit bereitstellen. Insbesondere werden Streuverluste minimiert, so dass ein heller Lichtspot erzeugt wird. Dabei sind die aus der Leuchtvorrichtung austretenden Lichtstrahlen überwiegend parallel ausgerichtet. Auch eine Bündelung bzw. Fokussierung des Lichtes mit der Reflexionsanordnung ist möglich. Für die Ausbildung der gewünschten Lichtstrahlcharakteristik können zudem optische Elemente z. B. Linsen und/oder Lichtleitkörper vorgesehen werden. Außerdem ist die erfindungsgemäße Leuchtvorrichtung kompakt bauend.

Gemäß einer Variante zum erfindungsgemäßen Fall, bei welchem das vom ersten Reflexionsabschnitt kommende Licht die Leuchtvorrichtung ohne weitere Reflexion verlässt, wird vorgeschlagen, dass vom ersten Reflexionsabschnitt kommendes Licht nach einer weiteren Reflexion die Reflexionsanordnung in der Hauptabstrahlrichtung verlässt. Demnach kann insbesondere eine Ab- bzw. Umlenkung erfolgen, so dass eine Abstrahlrichtung eines Lichtstrahls der Lichtquellen in Richtung der Hauptstrahlrichtung der Leuchtvorrichtung verläuft. Die weitere Reflexion kann insbesondere über einen zur optischen Achse bzw. Längsachse der Leuchtvorrichtung konzentrisch angeordneten Gegen-Reflexionsabschnitt erfolgen. Der Gegen-Reflexionsabschnitt kann z. B. schalen- bzw. trichterförmig sein. Alternativ kann der Gegen-Reflexionsabschnitt ausgehend von dieser Form ohne Trichterspitze bzw. konusringförmig gebildet sein bzw. eine zur virtuellen Trichterspitze konzentrische Öffnung aufweisen. Diese Öffnung kann als Lichtaustrittsöffnung für Licht aus der Reflexionsanordnung dienen, wenn z. B. vom Gegen-Reflexionsabschnitt abgehendes Licht nochmals reflektiert wird und anschließend durch die Öffnung tritt.

Grundsätzlich kann die Leuchtvorrichtung bzw. können deren Komponenten rotationssymmetrisch aufgebaut sein mit im Querschnitt runder Außenform der Bauteile. Die Leuchtvorrichtung kann jedoch auch in geschlossen polygonaler Querschnittsform bzw. in mehreckiger Außenform ausgestaltet sein. Damit lässt sich ein im Wesentlichen konischer Innenreflektor erzeugen. Die Reflexionsabschnitte wie z. B. Innen- und Außenreflektor können dann einzelne zueinander korrespondierende Reflexionsflächen aufweisen, also jeweils eine Reflexionsfläche des Außenreflektors mit einer Reflexionsfläche des Innenreflektors die Lichtstrahlen aufeinander reflektieren. Eine betrachtete Reflexionsfläche des Innenreflektors kann dann jeweils einer dazugehörigen Reflexionsfläche des Außenreflektors zugeordnet werden, wobei die betreffenden Lichtstrahlen zwischen diesen Abschnitten verlaufen.

Vorteilhafterweise umfassen die Lichtquellen mehrere Leuchtmittel, die um eine Austrittsöffnung der Reflexionsanordnung herum angeordnet sind. Damit kann die Leuchtvorrichtung platzsparend ausgebildet werden. Auch ist es damit sehr effektiv möglich, dass nahezu das gesamte abstrahlende Licht jeder Lichtquelle bzw. jedes Leuchtmittels direkt, also ohne Zwischenreflexion, auf den zweiten Reflexionsabschnitt trifft. Des Weiteren kann ein Einsetzen bzw. Entfernen einer einzelnen Lichtquelle und/oder von mehreren Lichtquellen gemeinsam leichter erfolgen.

Bevorzugt umfassen die Lichtquellen mehrere gleichartige Leuchtmittel. So kann ein Licht mit definierten Eigenschaften entsprechend den Eigenschaften der Art der Leuchtmittel erzeugt werden. Außerdem ist es praktikabel nur eine Art von Leuchtmittel für die mehreren Lichtquellen zu verwenden, was insbesondere bezüglich Bevorratung mit Leuchtmittel und deren in der Praxis regelmäßig auftretenden Austausch vorteilhaft ist.

Bislang besteht insbesondere bei professionellen Indoor- oder Outdoorscheinwerfern häufig ein immenser Wartungsaufwand, da diese insbesondere an exponierter Stelle montiert sind bzw. die Lebensdauer der eingebauten Lichtquellen meist nur zwischen 500 bis 3000 Stunden beträgt. Durch die erfindungsgemäße Leuchtvorrichtung bzw. Hochleistungslichtquelle kann demgegegenüber eine Lebensdauer der Lichtquellen von ca. 20.000 Stunden und mehr erreicht werden.

Grundsätzlich können unterschiedliche Arten von Lichtquellen bzw. Leuchtmittel in der vorgeschlagenen Leuchtvorrichtung verwendet werden. So kann eine Multileuchtmittelleuchteinheit realisiert werden, die Leuchtmittel aufweisen wie zum Beispiel Entladungslampen, Glühlampen, weiße LEDs oder Multichip LEDs, die eine Vielzahl von Farben erzeugen können.

Insbesondere ist es vorteilhaft, dass die Lichtquellen mehrere energiesparende Leuchtmittel wie zum Beispiel Leuchtdioden umfassen. Die Leistungsaufnahme der Leuchtvorrichtung aufgrund der Verwendung von energiesparenden Leuchtmittel wie zum Beispiel Leuchtdioden kann gegenüber anderen Leuchtmitteln wesentlich geringer ausfallen.

Insbesondere lässt sich bei einer Reihe von Anwendungen, wie z. B. die oben genannten, mit der erfindungsgemäßen Leuchtvorrichtung das Problem lösen, wonach vergleichsweise viel Energie bzw. elektrische Energie benötigt wird und ein großer Teil derselben in Form von bei der Nutzung der Leuchtvorrichtung erzeugten Wärme abstrahlt und nicht dem bestimmungsgemäßen Zweck der Lichtwirkung zur Verfügung steht. Neben dem nachteilig erhöhten Energieverbrauch, der nicht zur Lichterzeugung beiträgt, führt die starke Erhitzung zu erheblichen ggf. auch von der jeweiligen Anwendung abhängigen anderen Nachteilen bzw. Problemen. Bisher wird zur Problembehebung zum Beispiel versucht eine Konvektionskühlung bzw. Lüftersysteme zu integrieren. Ohne Gegenmaßnahmen würde das Innenleben der Scheinwerfer bzw. Projektoren durch die erhebliche Hitzeentwicklung aufgrund der Lichtstrahlen in Mitleidenschaft gezogen werden bzw. würden die betreffenden Leuchten versagen. Mit der erfindungsgemäßen Anordnung kann auf entsprechende Zusatzeinrichtungen bzw. Gegenmaßnahmen völlig bzw. zumindest großteils verzichtet werden.

Ein bisher z. B. bei Hochleistungsvideoprojektoren nötiger immenser Kühlaufwand entfällt, womit auch keine Kühlungsluft ins Innere gelangen kann und diese auch nicht gefiltert werden muss, so dass die Filter nicht notwendig sind bzw. ein Verstopfen von Filtern nicht stören kann.

Erstmals können nun neue Anwendungsgebiete mit entsprechenden Leuchtvorrichtungen abgedeckt werden, ohne eine bisher benötigte Zwangsluftkühlung oder andere auf die Hitzeentwicklung der Lichtquellen zurückzuführende Zusatzmaßnahmen. Für den Außeneinsatz ist dies besonders vorteilhaft, denn es können entsprechende schützende Gehäuse angeboten werden, ohne dass das Gehäuseöffnungen für den Lüfterbetrieb notwendig sind, die nachteilig sind bzw. versteckt oder modifiziert werden müssen.

Mit der erfindungsgemäßen Leuchtvorrichtung kann gegebenenfalls z. B. ein Einsatz von Lüftern, Infrarotfiltern bzw. eine andere Zusatzmaßnahme komplett unterbleiben, da der Lichtstrahl bzw. der Beam der Lichtquelle nicht besonders heiß wird. Es ist insbesondere damit eine Hochleistungslichtquelle vorteilhaft bereitstellbar. Bevorzugt sind die verwendeten Lichtquellen zum Beispiel nahe an einer Außenseite bzw. z. B. in guter wärmeleitender Verbindung zu einer Gehäuseaußenseite der Leuchtvorrichtung positioniert. Dadurch steht nach außen eine große Fläche für eine Wärmeabfuhr bzw. Kühlung z. B. eine Konvektionskühlung der Lichtquellen selbst bzw. der angrenzenden Bauteile zur Verfügung.

Des Weiteren ist mit dem Verzicht auf eine Lüftungskühlung möglich, einen Schmutzeintrag in die Geräte über die Kühlungsluft zu vermeiden. Aufgrund des Lichtstrahls von Lichtquellen mit geringer Leistung, wird ein "kalter" Strahl erzeugt, womit andere Materialien zum Einsatz kommen können als bisher. Insbesondere müssen keine hochhitzefesten Materialien verwendet werden, was die vorgeschlagene Anordnung wirtschaftlicher macht.

Auch eine bisher bemerkbare hohe Geräuschentwicklung von lüftergekühlten Film-, Fernseh- und Theaterleuchten bzw. Videoprojektoren kann nun nahezu auf Null reduziert werden.

Bisher wird eine Vielzahl von Leuchtvorrichtungen bzw. Scheinwerfern genutzt, welche Entladungslampen als Lichtquellen einsetzen. Diese Entladungslampen benötigen jedoch eine gewisse Anlaufzeit, bis sie ihre volle Helligkeit erreicht haben. Außerdem müssen diese nach Gebrauch erst so weit abkühlen, dass sie erneut gezündet werden können, was problematisch sein kann.

Änderungen der Farbtemperatur, wie sie bisher bei mit Entladungslampen betriebenen Lampen üblich sind, können ebenfalls vermieden werden. Denn die erfindungsgemäße Leuchtvorrichtung bzw. Hochleistungslichtquelle kann durch automatische Messung und Nachjustierung ihrer Farbtemperatur konstant gehalten werden.

Werden alternativer Lichtquellen eingesetzt und wird auf Entladungslampen verzichtet, können die dabei notwendigen hohen Zündspannungen vermieden werden.

Insbesondere durch den Einsatz von LED-Lichtquellen, z. B. Hochleistungsleuchtdiodenlichtquellen in der erfindungsgemäßen Leuchtvorrichtung können die entsprechenden Anordnungen sofort und jederzeit gezündet werden, wobei unmittelbar die volle Lichtleistung abrufbar ist. Außerdem kann das Licht zu hundert Prozent dimmbar gestaltet werden. Vorteilhafterweise können die LED-Lichtquellen auch im Stroboskopbetrieb genutzt werden.

Außerdem ist es möglich, Hochleistungslichtquellen mit LEDs unterschiedlicher Eigenschaften zu bestücken. Insbesondere können vorteilhafterweise Theaterscheinwerfer mit einer Lichtfarbe mit 3000 Grad Kelvin oder Filmscheinwerfer mit einer Lichtfarbe mit 6000 Grad Kelvin oder mehr realisierbar sind.

Weiter ist es vorteilhaft, dass eine Zusatzeinrichtung zur Beeinflussung des in die Hauptabstrahlrichtung reflektierten Lichts vorhanden ist. Damit kann die Lichtstrahlwirkung der Leuchtvorrichtung modifiziert bzw. ggf. je nach Anforderung an die Leuchtvorrichtung eingestellt werden. Unter anderem können dies z. B. Farbwechseleinrichtungen oder Strahlbeeinflussungseinrichtungen wie Iris, Shutter bzw. Zoom sein.

Bevorzugt umfasst die Zusatzeinrichtung ein optisches Element.

Außerdem wird vorgeschlagen, dass die Zusatzeinrichtung eine bilderzeugende Vorrichtung umfasst.

Falls ein Farbwechsel mit der Leuchtvorrichtung möglich sein soll, kann dies z. B. durch die Nutzung von Mehrfarben-LEDs, LED-Arrays oder durch die Vorschaltung eines Farbwechselsystems vor eine weiße Hochleistungslichtquelle erfolgen.

Auch die Projektion von Mustern, Bildern, Videos usw. kann vorteilhaft realisiert werden, da die vorgeschlagenen Leuchtvorrichtung bzw. Hochleistungslichtquelle einen scharfen Strahl produziert und wegen der vernachlässigbaren Wärme im Strahl optimale Voraussetzungen für das Anstrahlen von am oder im Scheinwerfer vorhandenen Elementen bzw. Materialien geschaffen sind. Hierzu zählen beispielsweise Flüssigkristallanzeigen, Digital Light Processing Panels (DLP-Panels), Filme bzw. Diafilme oder einsteckbare Masken bzw. sogenannte Gobos (graphical optical blackout).

Außerdem lassen sich mit der variabel ausrüstbaren Leuchtvorrichtung verschiedene Leistungsklassen ohne Weiteres realisieren, die insbesondere von der Anzahl bzw. der Leistung der Lichtquellen wie LEDs abhängig sind.

Weiter wird vorgeschlagen, dass der zweite Reflexionsabschnitt eine Vertiefung aufweist, in welcher weitere Lichtquellen und ein dritter und vierter Reflexionsabschnitt vorgesehen sind, welche in der Art des ersten und zweiten Reflexionsabschnitts ausgebildet sind, um Licht der weiteren Lichtquellen in die Hauptabstrahlrichtung zu reflektieren. So kann auf engstem Raum in der Leuchtvorrichtung eine zweite gleichartige Anordnung zur ersten größeren überlagert untergebracht werden, was insbesondere durch die zusätzlichen Lichtquellen die Leistungsstärke der Leuchtvorrichtung weiter erhöhen kann.

In einer vorteilhaften Modifikation des Erfindungsgegenstandes ist der zweite Reflexionsabschnitt als massiver Körper mit wenigstens einer Grenzfläche ausgebildet, z. B. in der Art eines als Prisma ausgebildeten geometrischen Körpers aus Glas oder Kunststoff.

Schließlich ist es vorteilhaft, dass die Leuchtvorrichtung derart konstruiert ist, dass Außenabmessungen der Leuchtvorrichtung zwischen ca. 40 mm und mehreren Metern liegen.

In einer vorteilhaften Modifikation des Erfindungsgegenstandes ist ein Umlenk-Reflexionsabschnitt vorgesehen, welcher Licht von den Lichtquellen auf den erhabenen zweiten Reflexionsabschnitt lenkt. So können die Lichtquellen im Hinblick auf deren Anbringpositionen und/oder räumlicher Ausrichtung variabel eingerichtet sein. Das Licht der Lichtquellen tritt demnach zunächst auf den Umlenk-Reflexionsabschnitt und wird von dort auf den erhabenen zweiten Reflexionsabschnitt geworfen. Das Licht der Lichtquellen lässt sich je nach Art des Umlenk-Reflexionsabschnitt immer in gewünschter Weise auf den zweiten Reflexionsabschnitt lenken. Der Umlenk-Reflexionsabschnitt kann sich an eine offene Seite bzw. an einem den Lichtquellen zugewandten Rand des ersten Reflexionsabschnitts anschließen. Insbesondere kann der Umlenk-Reflexionsabschnitt als eine Aufweitung gegenüber dem Trichter des ersten Reflexionsabschnitts ausgebildet sein. Der Umlenk-Reflexionsabschnitt kann als gesonderter Abschnitt oder einstückig mit dem ersten Reflexionsabschnitt ausgestaltet sein.

Es ist außerdem vorteilhaft, dass ein Gegen-Reflexionsabschnitt vorhanden ist, an bzw. mit dem vom ersten Reflexionsabschnitt ankommendes Licht reflektiert wird. So kann eine Strahlrichtung des Lichts umgelenkt werden, insbesondere in einen zentralen Bereich der Reflexionsanordnung bzw. zur optischen Achse hin. Die Reflexion eines Lichtstrahls am Gegen-Reflexionsabschnitt kann um mehr als zum Beispiel 130 Winkelgrade erfolgen.

In einer Anordnung, in welcher die Abstrahlrichtung eines Lichtstrahls der Lichtquellen in Richtung der Hauptabstrahlrichtung der Leuchtvorrichtung verläuft, kann der Gegen-Reflexionsabschnitt als letztes reflektierendes Bauteil der Reflexionsanordnung dienen, wobei mit dem Gegen-Reflexionsabschnitt ankommendes Licht vom ersten Reflexionsabschnitt in die Hauptabstrahlrichtung der Leuchtvorrichtung reflektiert wird. Im Bereich des innenliegenden zweiten Reflexionsabschnitts kann für ein Austreten des Lichts des so gebildeten Lichtspots eine entsprechende z. B. zentrale Öffnung vorgesehen sein. Diese kann mit ihrer Umrandung zusätzlich dazu beitragen, den gebildeten Lichtspot scharf umrandet auszubilden.

Besonders bevorzugt ist es, wenn der Gegen-Reflexionsabschnitt und ein Sammel-Reflexionsabschnitt derart vorhanden sind, dass vom ersten Reflexionsabschnitt ankommendes Licht auf den Gegen-Reflexionsabschnitt trifft und von dort auf den Sammel-Reflexionsabschnitt zurückgeworfen wird und von diesem in die Hauptabstrahlrichtung umgelenkt wird. So kann ein divergierender Anteil des erzeugten Lichtstrahls in Hauptabstrahlrichtung zumindest nahezu vollständig vermieden werden.

Der Gegen-Reflexionsabschnitt und der Sammel-Reflexionsabschnitt können insbesondere konzentrisch zu einer zentralen Längsachse bzw. optischen Achse der Leuchtvorrichtung positioniert sein. Der Sammel-Reflexionsabschnitt dient dabei zum Sammeln des Lichtes vom Gegen-Reflexionsabschnitt und Reflektieren in die schließlich mit der Leuchtvorrichtung bereitgestellten bzw. wirksamen Hauptabstrahlrichtung, die gegen die Abstrahlrichtung des Lichts der Lichtquellen verläuft. Der Abstand zwischen dem Gegen-Reflexionsabschnitt und dem Sammel-Reflexionsabschnitt kann in etwa einer Abmessung des Umlenk-Reflexionsabschnitt in Längsrichtung der Leuchtvorrichtung entsprechen.

Für Anordnungen, bei denen die Abstrahlrichtung eines Lichtstrahls der Lichtquellen in Richtung der Hauptabstrahlrichtung der Leuchtvorrichtung verläuft, ist ein Gegen-Reflexionsabschnitt vorzusehen, der in der Regel anders ausgebildet ist, als ein Gegen-Reflexionsabschnitt, der bei einer Anordnung eingesetzt wird, bei welcher die Abstrahlrichtung eines Lichtstrahls der Lichtquellen entgegen der Richtung der Hauptabstrahlrichtung der Leuchtvorrichtung verläuft.

### Figurenbeschreibung:

Weitere Vorteile und Merkmale der Erfindung werden anhand eines Ausführungsbeispiels der erfindungsgemäßen Leuchtvorrichtung aufgezeigt.

Im Einzelnen zeigt:
- Figur 1: eine perspektivische Ansicht auf eine erfindungsgemäße Hochleistungsleuchte unter Weglassung einzelner Bauteile,
- Figur 2: eine Ansicht auf die Anordnung gemäß Figur 1 gemäß Pfeil P1 in Figur 1,
- Figur 3: eine Ansicht auf die Anordnung gemäß Figur 1 gemäß Pfeil P2 in Figur 1,
- Figur 4: eine weitere perspektivische Ansicht der Anordnung gemäß Figur 1,
- Figur 5: eine vergrößerte Detailansicht gemäß dem umrandeten Bereich A aus Figur 1,
- Figur 6: eine vergrößerte Detailansicht gemäß dem umrandeten Bereich B aus Figur 4,
- Figur 7: eine vergrößerte Seitenansicht auf die Anordnung gemäß Figur 1,
- Figur 8 und 9: eine Variante der Reflexionsanordnung der erfindungsgemäßen Hochleistungsleuchte in schematisierter Teilansicht von der Seite im Schnitt und perspektivisch,
- Figur 10 und 11: eine weitere erfindungsgemäße Reflexionsanordnung in den Ansichten gemäß Figur 8 und Figur 9 und
- Figur 12 und 13: eine weitere Reflexionsanordnung einer erfindungsgemäßen Hochleistungsleuchte mit einer Hauptabstrahlrichtung in Richtung der Abstrahlrichtung eines Lichtstrahls der Lichtquellen in den Ansichten gemäß Figur 8 und Figur 9.

In den Figuren sind für sich entsprechende Teile von unterschiedlichen Ausführungsbeispielen teils die gleichen Bezugszeichen gewählt.

Die Figuren zeigen Ausführungsbeispiele einer erfindungsgemäßen Leuchtvorrichtung, die als Hochleistungsleuchte 1 ausgebildet und stark schematisiert gezeigt ist, wobei zur besseren Darstellung des grundlegenden Aufbaus der Leuchtvorrichtung Bauteile der Leuchtvorrichtung weggelassen sind.

Die Hochleistungsleuchte 1 umfasst einen Außenreflektor 2, einen Kühlkörper 3, Lichtquellen 4, einen konischen Innenreflektor 5 sowie optische Elemente 6, 7 und 8.

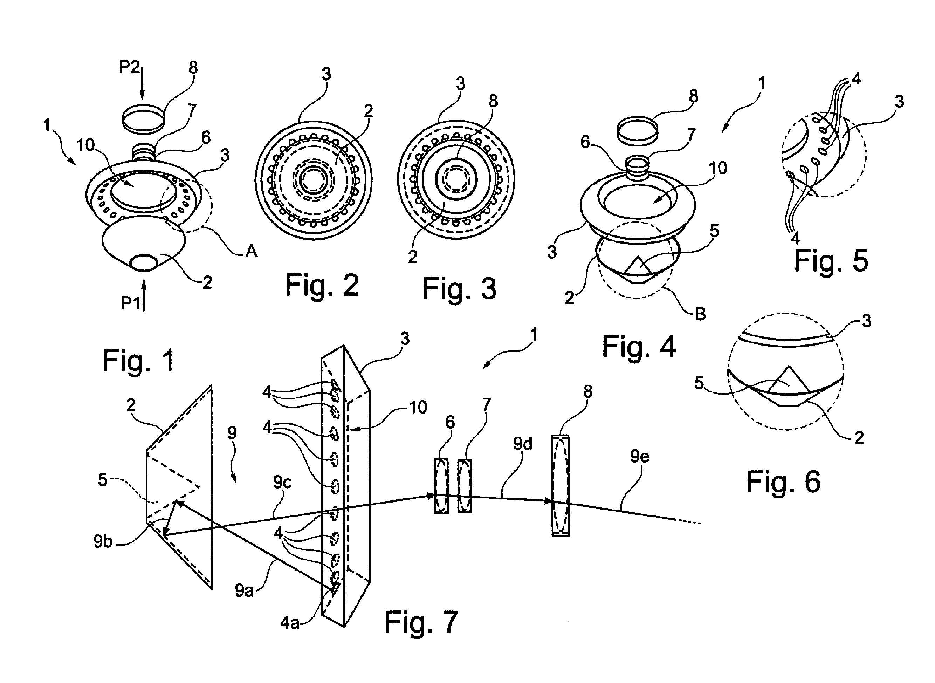

Die Lichtquellen 4 sind hier als Leuchtdioden bzw. LEDs ausgebildet. In Figur 7 ist ein möglicher bzw. idealisierter Verlauf eines einzelnen Lichtstrahls 9, der Abschnitte 9a bis 9e umfasst, einer herausgegriffenen Lichtquelle 4a dargestellt. Die Lichtquelle 4a ist identisch mit den anderen Lichtquellen 4 ausgebildet und in gleicher Ausrichtung und Abstand zu einer Reflexionsanordnung, die den Außenreflektor 2 und den Innenreflektor 5 umfasst. Der Lichtstrahl 9 trifft von der Lichtquelle 4a kommend zunächst auf den konischen Innenreflektor 5, was den ersten Abschnitt 9a des Lichtstrahls 9 ausmacht. Am Innenreflektor 5 wird der Lichtstrahl 9 reflektiert, so dass dieser gemäß Abschnitt 9b innen auf den Außenreflektor 2 trifft. Wie Abschnitt 9c verdeutlicht wird der Lichtstrahl 9 von dem Außenreflektor 2 ebenfalls reflektiert, so dass der Lichtstrahl 9 gemäß einer Hauptabstrahlrichtung zurückgeworfen wird und durch eine Austrittsöffnung 10, die vom Kühlkörper 3 bzw. den Lichtquellen 4 ringförmig umschlossen wird, nach außen tritt. Der Lichtstrahl 9 wird dann mittels der optischen Elemente 6 und 7 etwas in seiner Richtung verändert bzw. hier geringfügig nach außen aufgeweitet gemäß dem weiteren Abschnitt 9d. Der Lichtstrahl 9 trifft anschließend auf die weitere Optik bzw. das optische Element 8, so dass sich der die Hochleistungsleuchte 1 verlassende Strahl 9 gemäß Abschnitt 9e ergibt.

Die hier beispielhaft insgesamt 24 Leuchtdioden 4 bilden jeweils einen dem Lichtstrahl 9 entsprechenden abstrahlenden Lichtstrahl aus, so dass eine Überlagerung bzw. ein entsprechend verstärkter Lichtstrahl im Abschnitt 9e bzw. vor dem optischen Element 8 entsteht. Jede LED 4 bildet eine Vielzahl von parallelen Lichtstrahlen aus, womit insgesamt eine höchste Lichtleistung durch das erzeugte Lichtbündel bzw. durch den Beam mit scharfer Randausbildung realisierbar ist.

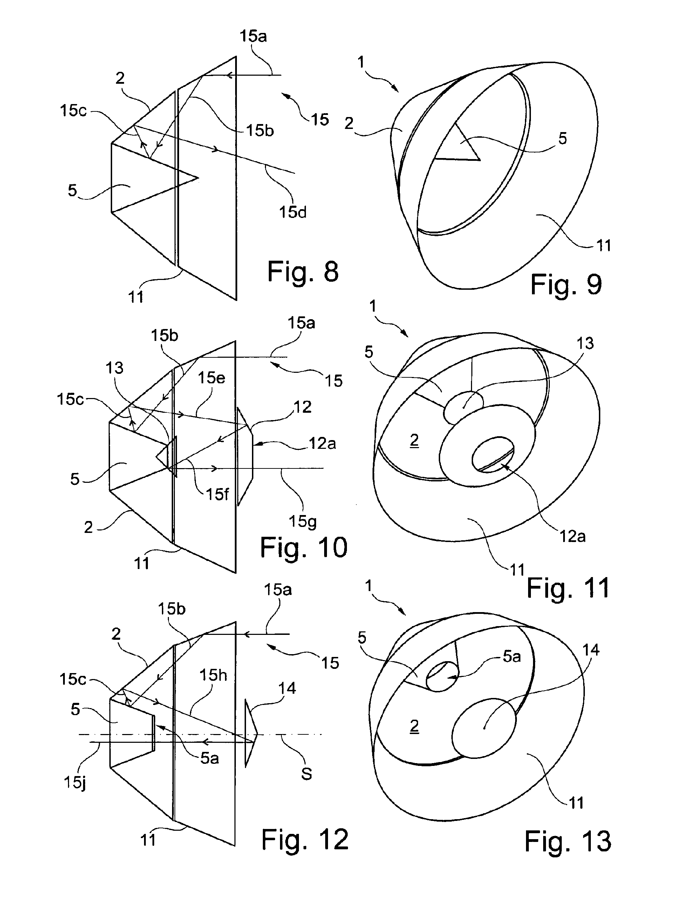

In sämtlichen Figur 8 bis 13 ist im Unterschied zu den Anordnungen gemäß Figur 1 bis Figur 7 jeweils ein Umlenk-Reflexionsabschnitt 11 vorhanden. Die weiteren gezeigten Teile der Hochleistungsleuchte 1 umfassen einen Außenreflektor 2 und einen konischen Innenreflektor 5. Ebenfalls vorhandene Teile wie ein Kühlkörper 3 mit einer Austrittsöffnung 10 und mehreren Lichtquellen 4 und ggf. vorhandene Optik- und/oder Lichtleitbauteile sind in den Figur 8 bis 13 nicht gezeigt.

Der Umlenk-Reflexionsabschnitt 11 ist in Richtung zum nicht dargestellten Kühlkörper hin jeweils als konisch sich aufweitender ringstreifenartiger Abschnitt gebildet. Die Innenoberfläche des Umlenk-Reflexionsabschnitt 11 ist reflektierend ausgebildet. Der Umlenk-Reflexionsabschnitt 11 kann sich ohne oder mit einem geringen Spalt mit seiner Außenflanke unter einem flachen Knick nach innen an den aufgeweiteten Rand des Außenreflektor 2 anschließen. Außerdem ist in den Figur 8, 10 und 12 jeweils ein beispielhaft herausgegriffener Verlauf eines Lichtstrahls 15 gezeigt, der sich in verschiedene Lichtstrahlabschnitte 15a bis 15c bzw. weitere Lichtstrahlabschnitte 15d bis 15j unterteilt.

Demnach wird das von den Lichtquellen ankommende Licht gemäß dem Lichtstrahlabschnitt 15a zunächst am Umlenk-Reflexionsabschnitt 11 nach innen gemäß 15b auf den erhabenen Reflektor bzw. Innenreflektor 5 reflektiert und von dort gemäß 15c auf den Außenreflektor 2 und von dort abgestrahlt, was gemäß Lichtstrahlabschnitt 15d in Figur 8 angedeutet ist. Diese Abfolge der Umlenkungen bzw. Reflexionen des Lichtes ist bei allen Anordnungen gemäß Figuren 8 bis 13 der Fall, wobei die jeweiligen konkreten Strahlengänge räumlich unterschiedlich verlaufen können. Gemäß Figur 8 erfolgt die Abstrahlung des Lichtstrahls vom Außenreflektor 2 gemäß dem Lichtabstrahlabschnitt 15d gebündelt bzw. fokussiert.

Gemäß Figur 10, 11 ist im Unterschied zur Anordnung gemäß Figur 8, 9 zwischen den nicht dargestellten Lichtquellen und dem Umlenk-Reflexionsabschnitt 11 ein mit zentraler Öffnung 12a versehener und ringkonischförmiger Gegen-Reflexionsabschnitt 12 positioniert. Vom Außenreflektor 2 gemäß des Lichtstrahlabschnitts 15e ankommendes Licht wird vom Gegen-Reflexionsabschnitt 12 nochmals gemäß Lichtstrahlabschnitt 15f reflektiert und auf einen außerdem vorgesehenen Sammel-Reflexionsabschnitt 13 geworfen. Der trichterförmige Sammel-Reflexionsabschnitt 13 ist am vorderen offenen Ende des Innenreflektors 5 positioniert und greift mit seiner Trichterspitze etwas in den Innenreflektor 5 hinein. Der Innenreflektor 5 ist hierzu gegenüber der spitzen Trichterform des Innenreflektors 5 gemäß Figur 8, 9 ohne Spitze bzw. kegelstumpfförmig. Vom Sammel-Reflexionsabschnitt 13 reflektiertes Licht verlässt die Reflexionsanordnung durch die Öffnung 12a gemäß des Lichtstrahlabschnitts 15g, so dass ein nicht divergierender Lichtstrahlbündel die Reflexionsanordnung bzw. die Hochleistungsleuchte 1 verlässt, dessen Lichtstrahlen zumindest nahezu parallel zu einer Längsachse S (Figur 12) der Hochleistungsleuchte 1 ausgerichtet sind.

Figur 12 und Figur 13 zeigt eine weitere konstruktive Abwandlung gemäß der Anordnung aus Figur 10 und 11. Es ist hier jedoch eine Hauptabstrahlrichtung in Richtung der Abstrahlrichtung der Lichtstrahlen der Lichtquellen realisiert. Dabei ist ein zu einer Längsachse S der Hochleistungsleuchte 1 konzentrischer trichterförmiger Gegen-Reflexionsabschnitt 14 vorgesehen, welcher vom Außenreflektor 2 gemäß des Lichtstrahlabschnitts 15h ankommendes Licht reflektiert und über eine Öffnung 5a des vorne offenen Innenreflektors 5 gemäß des Lichtstrahlabschnittes 15j nach außen reflektiert. Der abgehende gebündelte bzw. zusammengefasste Lichtstrahl verlässt die Hochleistungsleuchte 1 parallel zur Längsachse S.

Zur weiteren Beeinflussung der Lichtwirkung der Hochleistungsleuchte 1 kann ein optisches Lichtleit- bzw. Bündelungselement vorgesehen werden. Dies kann z. B. ein schlanker bzw. länglicher zylindrischer Körper aus lichtleitendem Material sein, mit dem es möglich ist, z. B. einen sich aufweitenden Lichtkegel in seiner Aufweitung stark zu verringern, beispielsweise einen Leuchtkegel mit einem Leuchtkegelwinkel von ca. 130 Winkelgraden auf ca. 10 Winkelgrade zu bringen. So kann ein scharf umrandeter heller Abbildungsspot bereitgestellt werden.

### Bezugszeichenliste:

- 1: Hochleistungsleuchte
- 2: Außenreflektor
- 3: Kühlkörper
- 4: Lichtquelle
- 4a: Lichtquelle
- 5: Innenreflektor
- 5a: Öffnung
- 6: optisches Element
- 7: optisches Element
- 8: optisches Element
- 9: Lichtstrahl
- 9a bis 9e: Lichtstrahlabschnitt
- 10: Austrittsöffnung
- 11: Umlenk-Reflexionsabschnitt
- 12: Gegen-Reflexionsabschnitt
- 12a: Öffnung
- 13: Sammel-Reflexionsabschnitt
- 14: Gegen-Reflexionsabschnitt
- 15: Lichtstrahl
- 15a bis 15j: Lichtstrahlabschnitt

## Patentansprüche

1. Leuchtvorrichtung (1) mit mehreren Lichtquellen (4) und einer Reflexionsanordnung, wobei die Lichtquellen (4) vor einer Reflexionsfläche der Reflexionsanordnung positioniert sind, wobei eine Abstrahlrichtung eines Lichtstrahls (9) der Lichtquellen (4) entgegen einer Hauptabstrahlrichtung der Leuchtvorrichtung (1) verläuft und wobei der Lichtstrahl (9) der Lichtquellen (4) durch Reflexion in die Hauptabstrahlrichtung der Leuchtvorrichtung (1) über die Reflexionsanordnung umgelenkt wird, wobei ein erster Reflexionsabschnitt (2) vorgesehen ist und ein erhaben ausgebildeter zweiter konischer oder im Wesentlichen konischer Reflexionsabschnitt (5) vorhanden ist, der in Bezug auf den ersten Reflexionsabschnitt (2) innenliegend und vom ersten Reflexionsabschnitt (2) zumindest teilweise umgeben ist, wobei der erste und der zweite Reflexionsabschnitt derart aufeinander abgestimmt sind, dass ein Hauptlichtstrahl dadurch erzeugbar ist, dass Licht der Lichtquellen (4) zuerst auf den erhabenen zweiten Reflexionsabschnitt (5) trifft und von dort auf den ersten Reflexionsabschnitt (2) reflektiert wird und nach einer erneuten Reflexion die Reflexionsanordnung in der Hauptabstrahlrichtung verlässt, wobei die Lichtquellen (4) mehrere Leuchtmittel umfassen, die um eine Austrittsöffnung (10) der Reflexionsanordnung herum angeordnet sind.

2. Leuchtvorrichtung mit mehreren Lichtquellen und einer Reflexionsanordnung, wobei die Lichtquellen vor einer Reflexionsfläche der Reflexionsanordnung positioniert sind, wobei eine Abstrahlrichtung eines Lichtstrahls (9) der Lichtquellen entgegen oder in Richtung einer Hauptabstrahlrichtung der Leuchtvorrichtung verläuft und wobei der Lichtstrahl (9) der Lichtquellen durch Reflexion in die Hauptabstrahlrichtung der Leuchtvorrichtung über die Reflexionsanordnung umgelenkt wird, wobei ein erster Reflexionsabschnitt (2) vorgesehen ist und ein erhaben ausgebildeter zweiter Reflexionsabschnitt (5) vorhanden ist, der in Bezug auf den ersten Reflexionsabschnitt (2) innenliegend und vom ersten Reflexionsabschnitt (2) zumindest teilweise umgeben ist, wobei der erste und der zweite Reflexionsabschnitt derart aufeinander abgestimmt sind, dass ein Hauptlichtstrahl dadurch erzeugbar ist, dass Licht der Lichtquellen nach einer Reflexion auf den erhabenen zweiten Reflexionsabschnitt (5) trifft und von dort auf den ersten Reflexionsabschnitt (2) reflektiert wird und nach einer Reflexion an diesem von dort abgestrahlt wird, wobei die Lichtquellen (4) mehrere Leuchtmittel umfassen, die um eine Austrittsöffnung (10) der Reflexionsanordnung herum angeordnet sind.

3. Leuchtvorrichtung nach Anspruch 1 oder 2, **dadurch gekennzeichnet, dass** vom ersten Reflexionsabschnitt (5) kommendes Licht nach einer weiteren Reflexion die Reflexionsanordnung in der Hauptabstrahlrichtung verlässt.

4. Leuchtvorrichtung nach einem der vorhergehenden Ansprüche, **dadurch gekennzeichnet, dass** die Lichtquellen (4) mehrere gleichartige Leuchtmittel umfassen.

5. Leuchtvorrichtung nach einem der vorhergehenden Ansprüche, **dadurch gekennzeichnet, dass** die Lichtquellen (4) mehrere energiesparende Leuchtmittel wie zum Beispiel Leuchtdioden umfassen.

6. Leuchtvorrichtung nach einem der vorhergehenden Ansprüche, **dadurch gekennzeichnet, dass** eine Zusatzeinrichtung (6, 7, 8) zur Beeinflussung des in die Hauptabstrahlrichtung reflektierten Lichts vorhanden ist.

7. Leuchtvorrichtung nach einem der vorhergehenden Ansprüche, **dadurch gekennzeichnet, dass** die Zusatzeinrichtung ein optisches Element (6, 7, 8) umfasst.

8. Leuchtvorrichtung nach einem der vorhergehenden Ansprüche, **dadurch gekennzeichnet, dass** die Zusatzeinrichtung eine bilderzeugende Vorrichtung umfasst.

9. Leuchtvorrichtung nach einem der vorhergehenden Ansprüche, **dadurch gekennzeichnet, dass** der zweite Reflexionsabschnitt eine Vertiefung aufweist, in welcher weitere Lichtquellen und ein dritter und vierter Reflexionsabschnitt vorgesehen ist, welche in der Art des ersten und zweiten Reflexionsabschnitts ausgebildet sind, um Licht der weiteren Lichtquellen in die Hauptabstrahlrichtung zu reflektieren.

10. Leuchtvorrichtung nach einem der vorhergehenden Ansprüche, **dadurch gekennzeichnet, dass** der zweite Reflexionsabschnitt als massiver Körper mit wenigstens einer Grenzfläche ausgebildet ist.

11. Leuchtvorrichtung nach einem der vorhergehenden Ansprüche, **dadurch gekennzeichnet, dass** die Leuchtvorrichtung derart konstruiert ist, dass Außenabmessungen der Leuchtvorrichtung zwischen ca. 40 mm und mehreren Metern liegen.

12. Leuchtvorrichtung nach einem der vorhergehenden Ansprüche 2 bis 11, **dadurch gekennzeichnet, dass** ein Umlenk-Reflexionsabschnitt (11) vorgesehen ist, welcher Licht von den Lichtquellen auf den erhabenen zweiten Reflexionsabschnitt (5) lenkt.

13. Leuchtvorrichtung nach einem der vorhergehenden Ansprüche, **dadurch gekennzeichnet, dass** ein Gegen-Reflexionsabschnitt (12, 14) vorhanden ist, mit dem vom ersten Reflexionsabschnitt ankommendes Licht reflektiert wird.

## Claims

1. Lighting device (1) having a plurality of light sources (4) and a reflection arrangement, the light sources (4) being positioned in front of a reflection surface of the reflection arrangement, an emission direction of a light beam (9) from the light sources (4) running in the opposite direction to a main emission direction of the lighting device (1) and the light beam (9) from the light sources (4) being deflected by reflection into the main emission direction of the lighting device (1) by the reflection arrangement, a first reflection section (2) being provided and a raised second conical or essentially conical reflection section (5) being provided, which is internal with respect to the first reflection section (2) and is at least partly surrounded by the first reflection section (2), the first and the second reflection sections being adjusted to one another such that a main light beam can be produced in that light from the light sources (4) first of all strikes the raised second reflection section (5) and is reflected from there onto the first reflection section (2) and after repeated reflection leaves the reflection arrangement in the main emission direction, the light sources (4) comprising a plurality of lighting means which are arranged about an outlet opening (10) of the reflection arrangement.

2. Lighting device having a plurality of light sources and a reflection arrangement, the light sources being positioned in front of a reflection surface of the reflection arrangement, an emission direction of a light beam (9) from the light sources running in the opposite direction to or in the direction of a main emission direction of the lighting device and the light beam (9) from the light sources being deflected by reflection into the main emission direction of the lighting device by the reflection arrangement, a first reflection section (2) being provided and a raised second reflection section (5) being provided, which is internal with respect to the first reflection section (2) and is at least party surrounded by the first reflection section (2), the first and second reflection sections being adjusted to one another such that a main light beam can be produced in that light from the light sources strikes the raised second reflection section (5) after reflection and is reflected from there onto the first reflection section (2) and is emitted from there after reflection thereon, the light sources (4) comprising a plurality of lighting means which are arranged about an outlet opening (10) of the reflection arrangement.

3. Lighting device as claimed in either claim 1 or 2, **characterised in that** light coming from the first reflection section (5) after a further reflection leaves the reflection arrangement in the main emission direction.

4. Lighting device according to any one of the preceding claims, **characterised in that** the light sources (4) comprise a plurality of lighting means of the same type.

5. Lighting device according to any one of the preceding claims, **characterised in that** the light sources (4) comprise a plurality of energy-saving lighting means, such as light-emitting diodes for example.

6. Lighting device according to any one of the preceding claims, **characterised in that** an additional device (6, 7, 8) is provided for influencing the light reflected in the main emission direction.

7. Lighting device according to any one of the preceding claims, **characterised in that** the additional device comprises an optical element (6, 7, 8).

8. Lighting device according to any one of the preceding claims, **characterised in that** the additional device comprises an imaging device.

9. Lighting device according to any one of the preceding claims, **characterised in that** the second reflection section has a depression in which further light sources and a third and a fourth reflection section are provided, which are designed in the same way as the first and second reflection sections, in order to reflect light from the additional light sources into the main emission direction.

10. Lighting device according to any one of the preceding claims, **characterised in that** the second reflection section is in the form of a solid body with at least one boundary surface.

11. Lighting device according to any one of the preceding claims, **characterised in that** the lighting device is designed such that the external dimensions of the lighting device are between approximately 40 mm and several metres.

12. Lighting device according to any one of the preceding claims 2 to 11, **characterised in that** a deflection-reflecting section (11) is provided which diverts light from the light sources to the raised second reflection section (5).

13. Lighting device according to any one of the preceding claims, **characterised in that** an opposing reflection section (12, 14) is provided, by means of which light coming from the first reflection section is reflected.

## Revendications

1. Dispositif d'éclairage (1) comportant plusieurs sources de lumière (4) et un système de réflexion, les sources de lumière (4) étant positionnées devant une surface de réflexion du système de réflexion, une direction de faisceau d'un faisceau lumineux (9) des sources de lumière (4) se dirigeant à l'encontre d'une direction de faisceau principale du dispositif d'éclairage (1), et le faisceau lumineux (9) des sources de lumière (4) étant dévié par réflexion dans la direction de faisceau principale du dispositif d'éclairage (1) par le biais du système de réflexion, une première section de réflexion (2) étant prévue et une deuxième section de réflexion (5) conique ou essentiellement conique de forme convexe étant présente, laquelle deuxième section de réflexion est située à l'intérieur par rapport à la première section de réflexion (2) et est entourée au moins partiellement par la première section de réflexion (2), la première et la deuxième section de réflexion étant ajustées l'une à l'autre de telle sorte qu'un faisceau lumineux principal peut être généré du fait que la lumière des sources lumineuses (4) rencontre tout d'abord la deuxième section de réflexion convexe (5) puis de là est réfléchie sur la première section de réflexion (2) et quitte le système de réflexion dans la direction de faisceau principale après une nouvelle réflexion, les sources de lumière (4) comprenant plusieurs éléments lumineux qui sont disposés autour d'une ouverture de sortie (10) du système de réflexion.

2. Dispositif d'éclairage comportant plusieurs sources de lumière et un système de réflexion, les sources de lumière étant positionnées devant une surface de réflexion du système de réflexion, une direction de faisceau d'un faisceau lumineux (9) des sources de lumière se dirigeant à l'encontre ou en direction d'une direction de faisceau principale du dispositif d'éclairage, et le faisceau lumineux (9) des sources de lumière étant dévié par réflexion dans la direction de faisceau principale du dispositif d'éclairage par le biais du système de réflexion, une première section de réflexion (2) étant prévue et une deuxième section de réflexion (5) de forme convexe étant présente, laquelle est située à l'intérieur par rapport à la première section de réflexion (2) et est entourée au moins partiellement par la première section de réflexion (2), la première et la deuxième section de réflexion étant ajustées l'une à l'autre de telle sorte qu'un faisceau lumineux principal peut être généré du fait que la lumière des sources de lumière rencontre la deuxième section de réflexion convexe (5) après une réflexion puis de là est réfléchie sur la première section de réflexion (2) puis après une réflexion sur celle-ci est renvoyée de là, les sources de lumière (4) comprenant plusieurs éléments lumineux qui sont disposés autour d'une ouverture de sortie (10) du système de réflexion.

3. Dispositif d'éclairage selon la revendication 1 ou 2, **caractérisé en ce qu**'une lumière provenant de la première section de réflexion (5) quitte le système de réflexion dans la direction de faisceau principale après une réflexion supplémentaire.

4. Dispositif d'éclairage selon l'une des revendications précédentes, **caractérisé en ce que** les sources de lumière (4) comprennent plusieurs éléments lumineux semblables.

5. Dispositif d'éclairage selon l'une des revendications précédentes, **caractérisé en ce que** les sources de lumière (4) comprennent plusieurs éléments lumineux à économie d'énergie, comme des diodes lumineuses.

6. Dispositif d'éclairage selon l'une des revendications précédentes, **caractérisé en ce que** un dispositif supplémentaire (6, 7, 8) est prévu pour influencer la lumière réfléchie dans la direction de faisceau principale.

7. Dispositif d'éclairage selon l'une des revendications précédentes, **caractérisé en ce que** le dispositif supplémentaire comprend un élément optique (6, 7, 8).

8. Dispositif d'éclairage selon l'une des revendications précédentes, **caractérisé en ce que** le dispositif supplémentaire comprend un dispositif générateur d'image.

9. Dispositif d'éclairage selon l'une des revendications précédentes, **caractérisé en ce que** la deuxième section de réflexion comprend un enfoncement dans lequel sont prévues d'autres sources de lumière ainsi qu'une troisième et une quatrième section de réflexion, lesquelles sont conçues à la façon de la première et de la deuxième section de réflexion pour réfléchir la lumière des autres sources de lumière dans la direction de faisceau principale.

10. Dispositif d'éclairage selon l'une des revendications précédentes, **caractérisé en ce que** la deuxième section de réflexion est conçue sous la forme d'un corps massif avec au moins une surface limite.

11. Dispositif d'éclairage selon l'une des revendications précédentes, **caractérisé en ce que** le dispositif d'éclairage est réalisé de telle sorte que les dimensions extérieures du dispositif d'éclairage sont comprises entre environ 40 mm et plusieurs mètres.

12. Dispositif d'éclairage selon l'une des revendications 2 à 11, **caractérisé en ce qu**'il est prévu une section de réflexion déflectrice (11), laquelle dévie la lumière des sources de lumière sur la deuxième section de réflexion convexe (5).

13. Dispositif d'éclairage selon l'une de revendications précédentes, **caractérisé en ce que** une section de réflexion opposée (12, 14) est présente à l'aide de laquelle est réfléchie la lumière provenant de la première section de réflexion.
